(19) Europäisches Patentamt
European Patent Office
Office européen des brevets

(11) **EP 4 451 372 A1**

(12) **EUROPEAN PATENT APPLICATION**
published in accordance with Art. 153(4) EPC

(43) Date of publication:
**23.10.2024 Bulletin 2024/43**

(21) Application number: **22907050.3**

(22) Date of filing: **28.10.2022**

(51) International Patent Classification (IPC):
**H01M 4/24** (2006.01)     **H01M 4/62** (2006.01)
**H01M 4/64** (2006.01)     **H01M 4/66** (2006.01)

(52) Cooperative Patent Classification (CPC):
**H01M 4/24; H01M 4/62; H01M 4/64; H01M 4/66;**
Y02E 60/10

(86) International application number:
**PCT/JP2022/040407**

(87) International publication number:
**WO 2023/112516 (22.06.2023 Gazette 2023/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.12.2021 JP 2021202461**

(71) Applicant: FDK Corporation
**Tokyo 108-8212 (JP)**

(72) Inventors:
• **SUZUKI, Soma**
  **Tokyo 108-8212 (JP)**
• **MURASE, Satoshi**
  **Tokyo 108-8212 (JP)**
• **YAMAGUCHI, Tomomichi**
  **Tokyo 108-8212 (JP)**
• **ITO, Takeshi**
  **Tokyo 108-8212 (JP)**
• **ENDO, Takahiro**
  **Tokyo 108-8212 (JP)**

(74) Representative: **Epping - Hermann - Fischer Patentanwaltsgesellschaft mbH**
**Schloßschmidstraße 5**
**80639 München (DE)**

(54) **ZINC BATTERY**

(57)     A battery 2 includes an exterior casing 10 and an electrode group 22 accommodated in the exterior casing 10 together with an alkaline electrolyte solution. The electrode group 22 includes a stack of a positive electrode 24 and a negative electrode 26 via a separator 28. The negative electrode 26 includes a negative electrode substrate and a negative electrode mixture held to the negative electrode substrate. The negative electrode mixture includes at least one of zinc, a zinc alloy, or a zinc-containing compound. The negative electrode substrate includes a main body and a tin-based surface layer covering the main body. The main body includes a non-porous sheet-shaped metallic conductor.

**EP 4 451 372 A1**

**Description**

Technical Field

The present invention relates to a zinc battery.

Background Art

Zinc batteries are batteries that use zinc, a zinc alloy, or a zinc-containing compound as a negative electrode active material. This type of batteries has been researched and developed for a long time along with the spread of batteries. Such batteries using zinc or the like in the negative electrode are available as, for example, primary batteries and secondary batteries (storage batteries). For example, research and development is underway on such batteries as zinc-air batteries using oxygen from the air as a positive electrode active material, nickel-zinc batteries using a nickel-containing compound as a positive electrode active material, manganese-zinc batteries and zinc-ion batteries using a manganese-containing compound as a positive electrode active material, and silver-zinc batteries using a silver-containing compound as a positive electrode active material. In particular, zinc-air primary batteries, manganese-zinc primary batteries, and silver-zinc primary batteries have become commercially practical and are widely used around the world.

In recent years, the use of batteries has been growing and has expanded to various portable devices, hybrid electric vehicles, and other various devices. Such expansion in use has increased the importance of the development and improvements of batteries in many industries. The development of new batteries and improvements of batteries are desired mainly in terms of excellent battery performance and usability as secondary batteries. Under these circumstances, zinc batteries too are desired to be upgraded. Here, one of the zinc battery performances to be enhanced is suppressed self-discharge.

Zinc batteries have a drawback in that the metallic zinc contained in the negative electrode undergoes a local battery reaction with a negative electrode substrate and is self-decomposed to cause the battery to be self-discharged.

A common practice to suppress the self-discharge of zinc batteries is to adopt a metal with a high hydrogen evolution overvoltage in a negative electrode substrate. The local battery reaction is more unlikely to proceed with increasing hydrogen evolution overvoltage of the metal used in the negative electrode substrate, and consequently the self-discharge of the battery can be suppressed.

Copper foam, punched copper, expanded copper, or the like is generally used as a negative electrode substrate in zinc batteries. Copper is a material having a relatively high hydrogen evolution overvoltage and also having high conductivity. Thus, copper contributes to enhancements in discharge characteristics while offering some suppression of the self-discharge of zinc batteries.

Furthermore, the self-discharge of zinc batteries is suppressed more effectively by plating copper foam, punched copper, expanded copper, or the like with tin that has a higher hydrogen evolution overvoltage (see, for example, Patent Literatures 1 and 2).

Citation List

Patent Literature

   PTL 1: Japanese Unexamined Patent Application Publication No. 11-026013
   PTL 2: Japanese Unexamined Patent Application Publication No. 2019-139986

Summary of Invention

Technical Problem

Incidentally, along with the growing use of batteries in various devices mentioned above, further improvements in self-discharge suppression are demanded also for zinc batteries mounted in such devices.

Specifically, the conventional zinc batteries, such as those described in Patent Literatures 1 and 2, have a reduced level of self-discharge but still do not fully meet the demands of users. That is, the self-discharge suppression in zinc batteries is not sufficient yet.

The present invention has been made based on the circumstances discussed above. It is therefore an object of the present invention to provide a zinc battery having smaller self-discharge than heretofore achieved.

Solution to Problem

According to the present invention, a zinc battery is provided that includes a container and an electrode group accommodated in the container together with an alkaline electrolyte solution, wherein the electrode group includes a stack of a positive electrode and a negative electrode via a separator; the negative electrode includes a negative electrode substrate and a negative electrode mixture held to the negative electrode substrate; the negative electrode mixture includes at least one of zinc, a zinc alloy, or a zinc-containing compound; the negative electrode substrate includes a main body and a tin-based surface layer covering the main body; and the main body includes a non-porous sheet-shaped metallic conductor.

Advantageous Effects of Invention

The zinc battery of the present invention includes a container and an electrode group accommodated in the container together with an alkaline electrolyte solution. The electrode group includes a stack of a positive electrode and a negative electrode via a separator. The negative electrode includes a negative electrode substrate and a negative electrode mixture held to the negative electrode substrate. The negative electrode mixture includes at least one of zinc, a zinc alloy, or a zinc-containing compound. The negative electrode substrate includes a main body and a tin-based surface layer covering the main body. The main body includes a non-porous sheet-shaped metallic conductor. The above configuration suppresses the progress of a local battery reaction at the negative electrode and can eliminate or reduce the self-discharge of the zinc battery of the present invention.

Brief Description of Drawing

[Fig. 1] FIG. 1 is a partially broken perspective view illustrating a nickel-zinc battery according to an embodiment.

Description of Embodiments

A nickel-zinc battery (hereinafter, also written as battery) 2 according to an embodiment will be described below with reference to the drawing.

The battery 2 is, for example, an FA-sized cylindrical battery. Specifically, as illustrated in FIG. 1, the battery 2 includes an exterior casing 10 as a cylindrical container with an open top and a bottom. The exterior casing 10 has conductivity, and its bottom wall 35 functions as a negative electrode terminal. A sealing member 11 is fixed to the opening of the exterior casing 10. The sealing member 11 includes a lid plate 14 and a positive electrode terminal 20 and seals the exterior casing 10 while providing the positive electrode terminal 20. The lid plate 14 is a conductive disc-shaped member. The lid plate 14 and a ring-shaped insulating packing 12 that surrounds the lid plate 14 are arranged in the opening of the exterior casing 10. The insulating packing 12 is fixed to an open-side edge 37 of the exterior casing 10 by crimping of the open-side edge 37 of the exterior casing 10. That is, the lid plate 14 and the insulating packing 12 cooperate with each other to airtightly close the opening of the exterior casing 10.

Here, the lid plate 14 has a central through-hole 16 at the center, and a valve 18 made of a rubber is arranged on the outer surface of the lid plate 14 so as to close the central through-hole 16. Furthermore, the positive electrode terminal 20, which is made of a metal and has a flanged cylindrical shape, is electrically connected to the outer surface of the lid plate 14 so as to cover the valve 18. The positive electrode terminal 20 presses the valve 18 toward the lid plate 14. The positive electrode terminal 20 has a gas vent hole (not shown).

Normally, the central through-hole 16 is airtightly closed by the valve 18. In the event that a gas is generated in the exterior casing 10 and the inner pressure is increased, the valve 18 is compressed by the inner pressure away from the central through-hole 16. As a result, the gas is released from the inside of the exterior casing 10 to the outside through the central through-hole 16 and the gas vent hole (not shown) in the positive electrode terminal 20. That is, the central through-hole 16, the valve 18, and the positive electrode terminal 20 constitute a safety valve for the battery.

An electrode group 22 is accommodated in the exterior casing 10. The electrode group 22 includes a positive electrode 24, a negative electrode 26, and a separator 28 each in the form of a strip. Specifically, the positive electrode 24 and the negative electrode 26 are wound into a coil with the separator 28 interposed therebetween. That is, the positive electrode 24 and the negative electrode 26 are stacked via the separator 28. The outermost periphery of the electrode group 22 is defined by part (the outermost loop) of the negative electrode 26 and is in contact with the inner peripheral wall of the exterior casing 10. That is, the negative electrode 26 and the exterior casing 10 are electrically connected to each other.

In the exterior casing 10, a positive electrode lead 30 is arranged between one end of the electrode group 22 and the lid plate 14. Specifically, one end of the positive electrode lead 30 is connected to the positive electrode 24 and the other end thereof is connected to the lid plate 14. Thus, the positive electrode terminal 20 and the positive electrode 24 are electrically connected to each other via the positive electrode lead 30 and the lid plate 14. A circular upper insulating member 32 is arranged between the lid plate 14 and the electrode group 22, and the positive electrode lead 30 extends through a slit 39 provided in the upper insulating member 32. A circular lower insulating member 34 is arranged between the electrode group 22 and the bottom of the exterior casing 10.

Furthermore, a predetermined amount of an alkaline electrolyte solution (not shown) has been poured in the exterior casing 10. The alkaline electrolyte solution impregnates the electrode group 22 and is mainly held in the separator 28. The alkaline electrolyte solution mediates electrochemical reactions (charging and discharging reactions) at the time of charging and discharging between the positive electrode 24 and the negative electrode 26. The alkaline electrolyte solution used here is preferably an aqueous solution containing at least one of KOH, NaOH, or LiOH as a solute. The concentration of the alkaline electrolyte solution is not particularly limited and is, for example, 7N. Because the battery 2 is a nickel-zinc battery, it is preferable to dissolve zinc oxide to a concentration that saturates the alkaline electrolyte solution. In this manner, the dissolution of zinc from the negative electrode into the alkaline electrolyte solution can be eliminated or reduced.

Exemplary materials of the separators 28 include nonwoven fabrics of polyamide fibers modified with a hydrophilic functional group, and nonwoven fabrics of polyolefin fibers, such as polyethylene or polypropylene, modified with a hydrophilic functional group. Specifically, it is preferable to use a nonwoven fabric mainly composed of polyolefin fibers modified with a sulfone group, namely, sulfonated polyolefin fibers. Here, the sulfone group is introduced by treating the nonwoven fabric with an acid containing a sulfate group, such as sulfuric acid or fuming sulfuric acid. Such a separator that includes sulfonated fibers allows the battery to exhibit excellent self-discharge characteristics. More preferably, the nonwoven fabric is combined with, for example, an overlay of a hydrophilicized polyolefin-based microporous membrane. Such a bilayer separator can suppress the occurrence of internal short-circuiting and can offer higher short-circuit resistance.

The positive electrode 24 includes a conductive positive electrode substrate having a porous structure, and a positive electrode mixture held to the positive electrode substrate. For example, the positive electrode substrate is a nickel metal body having a three-dimensional network framework. The framework of the metal body is continuous over the entirety of the positive electrode substrate, and the gaps in the framework define open cells. The open cells are filled with the positive electrode mixture. The metal body used here may be, for example, nickel foam.

The positive electrode mixture includes a positive electrode active material, a positive electrode additive, and a binder. The binder serves to bind the positive electrode active material and the positive electrode additive to each other and also to bind the positive electrode active material and the positive electrode additive to the positive electrode substrate. Examples of the binders used here include hydrophilic polymers and hydrophobic polymers.

Nickel hydroxide is used as the positive electrode active material. The form of the nickel hydroxide is powdery. That is, a nickel hydroxide powder that is a collection of nickel hydroxide particles is used. The nickel hydroxide particles used here are preferably particles of a higher nickel hydroxide.

The nickel hydroxide particles described above preferably contain solutes, such as Co, Zn, and Cd.

In a preferred embodiment, the surface of the nickel hydroxide particles is covered with a surface layer including a cobalt compound. This surface layer is preferably a higher cobalt compound layer that includes a trivalent or higher cobalt compound.

The higher cobalt compound layer excels in conductivity and forms a conductive network. The higher cobalt compound layer is preferably a layer that includes a trivalent or higher cobalt compound, such as cobalt oxyhydroxide (CoOOH).

Next, the positive electrode additive may be yttrium oxide. It is also preferable to use, for example, a cobalt compound, such as cobalt oxide, metallic cobalt, or cobalt hydroxide, a zinc compound, such as metallic zinc, zinc oxide, or zinc hydroxide, or a rare earth compound, such as erbium oxide.

Next, the positive electrode 24 may be produced, for example, as follows.

First, a positive electrode additive, water, and a binder are added to a positive electrode active material powder that is a collection of positive electrode active material particles obtained as described above, and the mixture is kneaded to give a positive electrode mixture slurry. The positive electrode mixture slurry obtained is loaded into, for example, nickel foam and is subsequently subjected to a drying treatment. After the drying treatment, the nickel foam filled with the nickel hydroxide particles and other materials is rolled and is then cut. A positive electrode 24 including the positive electrode mixture is thus obtained.

Next, the negative electrode 26 will be described.

The negative electrode 26 has a strip-shaped conductive negative electrode substrate, and a negative electrode mixture held to the negative electrode substrate.

The negative electrode substrate has a main body and a surface layer covering the main body. The main body is a non-porous sheet-shaped metallic conductor or a so-called non-porous foil. Specifically, a copper foil may be used. Here, the term "non-porous" means that the sheet has no through-holes penetrating from one side to the other side thereof.

The metallic conductor described above may be a foil of a metal material other than copper foil. For example, a foil of brass (an alloy of copper and zinc) is preferably used. Copper and brass are metal materials with a relatively high hydrogen evolution overvoltage. Because of this fact, the dissolution of metallic zinc can be retarded and the self-discharge of the zinc battery can be suppressed. Incidentally, brass is used also as a current collector for alkaline dry batteries and can therefore be adequately used in zinc batteries. Furthermore, the metallic conductor may be a foil of iron or nickel. However, iron and nickel have a relatively low hydrogen evolution overvoltage and therefore these metals have a risk of promoting the self-discharge of the zinc battery. Thus, as will be described later, the use of iron or nickel preferably involves tin plating on the iron or nickel. Tin is a metal material that has a relatively high hydrogen evolution overvoltage and thus can reduce or eliminate the occurrence of the problem encountered when iron or nickel is used. Furthermore, the metallic conductor may be a metallic zinc foil. However, metallic zinc is consumed by the battery reactions and the metallic zinc as the conductor may be exhausted by repeated charging and discharging over a long period of time. Thus, the use of metallic zinc as the metallic conductor is preferably limited to short-term applications.

The surface layer described above is mainly formed of tin and is, for example, a thin film of tin plating. Examples other than a thin film of tin plating include thin films of tin alloy platings, such as tin-bismuth alloy plating, tin-indium alloy plating, tin-silver alloy plating, tin-copper alloy plating, tin-nickel alloy plating, tin-cobalt alloy plating, and tin-zinc alloy plating.

Here, a case will be described in which a thin film of tin plating or tin alloy plating is formed on a copper foil. As practiced in the conventional method, it is preferable that the tin plating or the tin alloy plating be applied after the copper foil is plated with nickel. If the copper foil is directly plated with tin or a tin alloy, tin may be disadvantageously diffused and penetrate into the copper foil or so-called whiskers may disadvantageously occur on the tin surface. The occurrence of these problems can be advantageously suppressed by interposing nickel between copper and tin.

The main body described above has no pores and is therefore flat as a whole without any corners or edges that will be present around pores. At the time of electrolytic plating, a current flows uniformly throughout the surface of the entirely flat main body and the resultant plating film is excellent in thickness uniformity. In the case of electroless plating, the plating solution is allowed to be brought into contact uniformly to the surface of the main body and thus can form a plating film excellent in thickness uniformity.

Here, the thickness uniformity of the plating indicates the magnitude in difference between the maximum plating thickness and the minimum plating thickness. The thickness uniformity is greater with decreasing difference. The thickness uniformity is poorer with increasing difference.

The negative electrode mixture includes a negative electrode active material, a negative electrode additive, and a binder.

The negative electrode active material includes at least one of zinc, a zinc alloy, or a zinc-containing compound. Here, it is preferable that the raw materials constituting the zinc alloy include zinc and, for example, bismuth, aluminum, or indium. Examples of the zinc-containing compounds include zinc oxide (Grade 1/Grade 2/Grade 3), zinc hydroxide, zinc sulfide, tetrahydroxyzinc ion salts, zinc halides, zinc carboxylate compounds, such as zinc acetate, zinc tartrate, and zinc oxalate, magnesium zincate, calcium zincate, barium zincate, zinc borate, zinc silicate, zinc aluminate, zinc fluoride, zinc carbonate, zinc hydrogencarbonate, zinc nitrate, and zinc sulfate.

The form of the negative electrode active material is powdery. That is, a negative electrode active material powder that is a collection of particles of the negative electrode active material is used. The particle size of the particles of the negative electrode active material is not particularly limited. The average particle size is preferably 10 to 1000 $\mu$m for zinc or a zinc alloy and is preferably 0.1 to 100 $\mu$m for a zinc-containing compound. As used herein, the average particle size means the average particle size at 50% cumulative mass and is determined by a laser diffraction/scattering method using a particle size distribution analyzer.

The negative electrode additive serves to improve characteristics of the negative electrode. Examples of the negative electrode additives include bismuth oxide, bismuth hydroxide, indium oxide, indium hydroxide, potassium oxalate, and hydrates thereof.

The binder serves to bind the negative electrode active material, the negative electrode additive, and other components to one another and also to bind the negative electrode active material, the negative electrode additive, and other components to the negative electrode substrate. Here, examples of the binders include hydroxypropylcellulose, carboxymethylcellulose, polyvinyl alcohol, polyvinylpyrrolidone, polyacrylic acid, sodium polyacrylate, polyimide, polyamideimide, polyamide, styrene-butadiene rubber, polyethylene oxide, polytetrafluoroethylene, polyvinylidene fluoride, perfluoroalkoxy fluororesins, and ethylene tetrafluoride/propylene hexafluoride copolymer. It is preferable to add at least one of these binders. In particular, styrene-butadiene rubber is more preferable because the use thereof offers high binding effects.

Next, the negative electrode 26 may be produced, for example, as follows.

First, a negative electrode active material powder that is a collection of particles of a negative electrode active material (such as zinc), a negative electrode additive, a binder, and water are kneaded to give a negative electrode mixture paste. The negative electrode mixture paste obtained is applied to a negative electrode substrate and is subjected to a drying treatment. After the drying, the negative electrode substrate holding the negative electrode active material powder, the negative electrode additive, and other materials is rolled in its entirety to increase the packing density of the negative electrode active material. An intermediate negative electrode is thus obtained. The intermediate negative electrode is then cut into a predetermined shape to give a negative electrode 26.

The positive electrode 24 and the negative electrode 26 produced as described above are wound into a coil with the separator 28 interposed therebetween to form an electrode group 22.

The electrode group 22 thus obtained is placed into an exterior casing 10. Subsequently, a predetermined amount of an alkaline electrolyte solution is poured into the exterior casing 10. The exterior casing 10 containing the electrode group 22 and the alkaline electrolyte solution is then sealed with a sealing member 11 having a positive electrode terminal 20. A battery 2 is thus obtained. The battery 2 obtained is subjected to an initial activation treatment and is ready for use.

[EXAMPLES]

1. Production of batteries

(EXAMPLE 1)

(1) Production of positive electrode

Nickel sulfate, zinc sulfate, and cobalt sulfate were weighed so that the amounts of zinc and cobalt would be 4.0 parts by mass and 1.0 part by mass, respectively, with respect to 100 parts by mass of nickel hydroxide. These materials were added to a 1 mol/L aqueous sodium hydroxide solution containing ammonium ions to give an aqueous mixture solution. While performing stirring of the aqueous mixture solution obtained, a 1 mol/L aqueous sodium hydroxide solution was gradually added to the aqueous mixture solution to perform the reaction. During the reaction, the pH was stabilized at 11. Thus, base particles principally containing nickel hydroxide and also containing Zn and Co solutes were formed.

The base particles obtained were washed three times with a 10-fold amount of pure water and were dehydrated and dried. The base particles obtained were analyzed with a laser diffraction/scattering particle size distribution analyzer to measure the particle size. The average particle size at 50% cumulative mass of the base particles was 8 $\mu$m.

Next, the base particles obtained were added to an aqueous cobalt sulfate solution. While performing stirring of the aqueous cobalt sulfate solution, a 1 mol/L aqueous sodium hydroxide solution was gradually added dropwise to perform the reaction. During the reaction, the pH was maintained at 11. A precipitate was thus formed. Next, the precipitate formed was separated by filtration, washed with pure water, and dried in vacuum. Intermediate product particles were thus obtained in which the surface of the base particles was coated with 5 mass% of a cobalt hydroxide layer. The thickness of the cobalt hydroxide layer was about 0.1 $\mu$m.

Next, the intermediate product particles were added to a 25 mass% aqueous sodium hydroxide solution in a mass ratio P:Q = 1:10 where P was the mass of the powder, namely, the collection of the intermediate product particles, and Q was the mass of the aqueous sodium hydroxide solution. Subsequently, the aqueous sodium hydroxide solution containing the powder of the intermediate product was heat treated at a constant temperature of 85°C for 8 hours while performing stirring.

The heat-treated powder of the intermediate product was washed with pure water and was dried by application of 65°C hot air. In this manner, the surface of the base particles containing Zn and Co solutes was coated with a surface layer including a higher cobalt oxide. A positive electrode active material powder that was a collection of such positive electrode active material particles was thus obtained.

Next, 0.5 parts by mass of a powder of yttrium oxide, 0.3 parts by mass of a powder of niobium oxide, 0.5 parts by mass of a powder of zinc oxide, and 50.0 parts by mass of water containing 0.2 mass% of a powder of hydroxypropylcellulose as a binder were added to 100 parts by mass of the positive electrode active material powder obtained as described above. The mixture was kneaded to give a positive electrode mixture slurry.

Next, a sheet-shaped nickel foam as a positive electrode substrate was filled with the positive electrode mixture slurry. The nickel foam used here had an area density (a basis weight) of about 350 g/m$^2$, a porosity of 95%, and a thickness of 1.3 mm.

Next, the nickel foam filled with the positive electrode mixture slurry was dried. Subsequently, the nickel foam filled with the positive electrode mixture was rolled in its entirety and was cut into a predetermined size. A positive electrode 24 for FA size was thus obtained.

(2) Production of negative electrode

100 Parts by mass of a powder of zinc oxide, 25 parts by mass of a powder of a zinc alloy, 3 parts by mass of a powder of bismuth oxide, 0.1 part by mass of a powder of indium oxide, 2 parts by mass of a powder of potassium oxalate monohydrate, 1 part by mass of a powder of hydroxypropylcellulose, 8 parts by mass of an aqueous styrene-butadiene rubber dispersion (50% liquid), and 100 parts by mass of water were added. The mixture was kneaded in an environment at 25°C to give a negative electrode mixture paste.

Here, the zinc oxide particles constituting the zinc oxide powder had an average particle size of 0.75 $\mu$m, and the particles constituting the zinc alloy powder had an average particle size of 70 $\mu$m.

Separately, a negative electrode substrate was produced as follows. First, a non-porous copper foil was provided as a main body of the negative electrode substrate. This non-porous copper foil was 35 $\mu$m in thickness and was in the form of a sheet containing no pores. Next, the non-porous copper foil was electrolytically tin plated by a conventional method so that the thickness would be about 3 $\mu$m. Specifically, the non-porous copper foil was first plated with nickel to a thickness of 0.5 $\mu$m and was then plated with tin. The non-porous copper foil that had been tin plated as described above (hereinafter, also written as the tin-plated non-porous copper foil) was analyzed to measure the thickness of the tin plating at randomly selected 10 locations. The data obtained was analyzed to determine the average of the values measured at 10 locations, the maximum of the values measured at 10 locations, and the minimum of the values measured at 10 locations. The results are described in Table 1. In the tin plating of this EXAMPLE, the average thickness was 3.2 $\mu$m, the maximum value was 3.5 $\mu$m, and the minimum value was 3.0 $\mu$m. The difference between the maximum value and the minimum value was 0.5 $\mu$m. Thus, the tin plating obtained had high uniformity.

The negative electrode mixture paste obtained as described above was uniformly applied to both sides of the tin-plated non-porous copper foil as the negative electrode substrate so that the thickness would be constant.

The negative electrode mixture paste was dried. The tin-plated non-porous copper foil holding the negative electrode mixture was rolled and was cut into a predetermined size. A negative electrode 26 for FA size was thus obtained.

(3) Fabrication of nickel-zinc battery

The positive electrode 24 and the negative electrode 26 obtained as described above were wound into a coil with a separator 28 interposed therebetween to give an electrode group 22. The separator 28 used here in the production of the electrode group 22 had a bilayer structure in which a hydrophilized polypropylene microporous membrane was stacked on a base nonwoven fabric made of sulfonated polyolefin fibers. The thickness thereof was 0.16 mm (basis weight: 74 g/m$^2$).

Separately, an alkaline electrolyte solution was provided that was an aqueous solution including alkali metal hydroxides as solutes and saturated with zinc oxide. In the alkaline electrolyte solution, the molar mixing ratio of KOH, NaOH, and LiOH was KOH:NaOH:LiOH = 6:0:0.5 and the specific gravity was 1.31.

Next, the electrode group 22 described above was placed into a bottomed cylindrical exterior casing 10, and 5.3 g of the alkaline electrolyte solution provided above was poured. Subsequently, the opening of the exterior casing 10 was closed with a sealing member 11. An FA-sized battery 2 with a nominal capacity of 2000 mAh was thus fabricated.

(4) Initial activation treatment

The battery 2 obtained was subjected to charging-discharging cycles in an environment at a temperature of 25°C. Each cycle consisted of charging and discharging operations in which the battery was charged at a charging current of 0.1 It for 12.5 hours and was then discharged at a discharging current of 0.2 It until the battery voltage reached 1.3 V. As a result of this initial activation treatment, the battery 2 was ready for use.

(EXAMPLE 2)

A nickel-zinc battery was produced in the same manner as in EXAMPLE 1, except that the negative electrode mixture paste was prepared while replacing the styrene-butadiene rubber with the same amount of polytetrafluoroethylene. In the nickel-zinc battery of EXAMPLE 2, the negative electrode mixture easily fell off from the negative electrode substrate, and the rejection rate increased compared to EXAMPLE 1.

(COMPARATIVE EXAMPLE 1)

A nickel-zinc battery was produced in the same manner as in EXAMPLE 1, except that the negative electrode substrate was changed from the tin-plated non-porous copper foil to tin-plated punched copper. Here, the punched metal in COMPARATIVE EXAMPLE 1 was a 60 $\mu$m thick copper sheet that had been perforated with 1.5 mm diameter through holes at pitches of 2.1 mm in the feed direction and 1.8 mm in the width direction. The punched metal had been electrolytically tin plated by a conventional method so that the thickness would be about 3 $\mu$m. Specifically, the punched copper was first plated with nickel to a thickness of 0.5 $\mu$m and was then plated with tin. The punched metal that had been tin plated as described above was analyzed to measure the thickness of the tin plating at randomly selected 10 locations. The data obtained was analyzed to determine the average of the values measured at 10 locations, the maximum of the values measured at 10 locations, and the minimum of the values measured at 10 locations. The results are described in Table 1. In the tin plating of COMPARATIVE EXAMPLE 1, the average thickness was 3.0 $\mu$m, the maximum value was 3.5 $\mu$m, and the minimum value was 1.5 $\mu$m. The difference between the maximum value and the minimum value was 2.0 $\mu$m. Thus, the tin plating obtained had lower uniformity compared to EXAMPLE 1.

(COMPARATIVE EXAMPLE 2)

A nickel-zinc battery was produced in the same manner as in EXAMPLE 1, except that the negative electrode substrate was changed from the tin-plated non-porous copper foil to tin-plated expanded copper. Here, the expanded metal in COMPARATIVE EXAMPLE 2 was one obtained by cutting and expanding a 60 $\mu$m thick copper sheet in a staggered manner with a die to form a mesh. The openings of the mesh were rhombic. The length in the shorter direction of the rhomboid was 1.2 $\mu$m and the length in the longer direction of the rhomboid was 2.0 $\mu$m. The expanded metal had been electrolytically tin plated by a conventional method so that the thickness would be about 3 $\mu$m. Specifically, the expanded copper was first plated with nickel to a thickness of 0.5 $\mu$m and was then plated with tin. The expanded metal that had been tin plated as described above was analyzed to measure the thickness of the tin plating at randomly selected 10 locations. The data obtained was analyzed to determine the average of the values measured at 10 locations, the maximum of the values measured at 10 locations, and the minimum of the values measured at 10 locations. The results are described in Table 1. In the tin plating of COMPARATIVE EXAMPLE 2, the average thickness was 3.0 $\mu$m, the maximum value was 3.5 $\mu$m, and the minimum value was 2.5 $\mu$m. The difference between the maximum value and the minimum value was 1.0 $\mu$m. Thus, the tin plating obtained had lower uniformity compared to EXAMPLE 1.

2. Evaluation of nickel-zinc batteries

(1) Self-discharge test

The self-discharge test consisted of a capacity determination stage and a self-discharge stage. First, in the capacity determination stage, the batteries of EXAMPLE 1 and COMPARATIVE EXAMPLES 1 and 2 that had been subjected to the initial activation treatment were charged at a constant current and a constant voltage (CCCV) in an environment at 25°C. As presettings, the upper limit current was 0.5 C, the upper limit voltage was 1.9 V, and the charge capacity limit was the nominal capacity. After a rest of 15 minutes, the batteries were discharged at a constant current (CC) of 0.5 C with a lower limit current of 1.3 V to determine the discharge capacity C.
Next, in the self-discharge stage, each of the batteries from the capacity determination stage was CCCV charged with an upper limit current of 0.5 C, an upper limit voltage of 1.9 V, and a charge capacity limit of the nominal capacity, then allowed to stand in an environment at 35°C for 2 weeks, and CC discharged at 0.5 C with a lower limit current of 1.3 V in an environment at a room temperature of 25°C. The discharge capacity C' was obtained.
The remainder ratio R was determined from the formula (I) shown below. The results obtained are described in Table 1.

$$R \; [\%] \; = \; (C'/C) \; \times \; 100 \; \cdots (I)$$

Here, the larger the value of the remainder ratio R, the more the capacity remaining in the battery and the more the self-discharge was suppressed.

[Table 1]

Table 1

| | Configuration of negative electrode substrate | Thickness of main body of negative electrode substrate [μm] | Thickness of tin plating of negative electrode substrate [μm] | | | Remainder ratio R [%] |
|---|---|---|---|---|---|---|
| | | | Average of values measured at 10 locations | Maximum of values measured at 10 locations | Minimum of values measured at 10 locations | |
| EX. 1 | Tin-plated non-porous copper foil | 35 | 3.2 | 3.5 | 3.0 | 81.3 |
| COMP. EX. 1 | Tin-plated punched copper | 60 | 3.0 | 3.5 | 1.5 | 77.3 |
| COMP. EX. 2 | Tin-plated expanded copper | 60 | 3.0 | 3.5 | 2.5 | 79.3 |

(2) Discussions

(i) The remainder ratios R of the nickel-zinc batteries of COMPARATIVE EXAMPLES 1 and 2 are 77.3% and 79.3%, respectively. In contrast, the remainder ratio R of the nickel-zinc battery of EXAMPLE 1 is 81.3%. Thus, it can be said that EXAMPLE 1 suppressed self-discharge and attained improved self-discharge characteristics as compared to COMPARATIVE EXAMPLES 1 and 2. The reasons behind this are probably because the uniformity of the tin plating was enhanced in EXAMPLE 1 by virtue of the use of the non-porous copper foil as the main body of the negative electrode substrate and consequently the local battery reaction was suppressed. The punched metal and the expanded metal used in COMPARATIVE EXAMPLES 1 and 2 are difficult to tin plate uniformly, and the uniformity of the tin plating is lowered. This is probably the reason why the local battery reaction occurred easily and the batteries were self-discharged.

(ii) As shown in EXAMPLE 2, the non-use of styrene-butadiene rubber increases the rejection rate. When styrene-butadiene rubber is added to the negative electrode mixture as is the case in EXAMPLE 1, the binding strength is increased and the negative electrode mixture can bind sufficiently even to a non-porous foil. By the addition of styrene-butadiene rubber, the binding strength that is exhibited is comparable to when a conventional punched metal or expanded metal is used in the negative electrode substrate. The addition of styrene-butadiene rubber to the negative electrode mixture is thus preferable.

It should be noted that the present invention is not limited to the embodiments and EXAMPLES described hereinabove, and various modifications are possible. For example, the present invention is not limited to secondary batteries and offers similar effects even when applied to primary batteries.

Reference Signs List

2      nickel-zinc battery
22    electrode group
24    positive electrode
26    negative electrode
28    separator

**Claims**

**1.** A zinc battery comprising a container and an electrode group accommodated in the container together with an alkaline electrolyte solution, wherein

the electrode group comprises a stack of a positive electrode and a negative electrode via a separator,
the negative electrode comprises a negative electrode substrate and a negative electrode mixture held to the negative electrode substrate,
the negative electrode mixture comprises at least one of zinc, a zinc alloy, or a zinc-containing compound,
the negative electrode substrate comprises a main body and a tin-based surface layer covering the main body, and
the main body comprises a non-porous sheet-shaped metallic conductor.

2. The zinc battery according to claim 1, wherein
the metallic conductor is a non-porous copper foil.

3. The zinc battery according to claim 1 or 2, wherein
the negative electrode mixture further comprises styrene-butadiene rubber.

## INTERNATIONAL SEARCH REPORT

| | International application No. |
| --- | --- |
| | **PCT/JP2022/040407** |

### A.    CLASSIFICATION OF SUBJECT MATTER

*H01M 4/24*(2006.01)i; *H01M 4/62*(2006.01)i; *H01M 4/64*(2006.01)i; *H01M 4/66*(2006.01)i
FI:    H01M4/24 H; H01M4/66 A; H01M4/64 A; H01M4/62 C

According to International Patent Classification (IPC) or to both national classification and IPC

### B.    FIELDS SEARCHED

Minimum documentation searched (classification system followed by classification symbols)

H01M4/24; H01M4/62; H01M4/64; H01M4/66; H01M4/06

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C.    DOCUMENTS CONSIDERED TO BE RELEVANT

| Category* | Citation of document, with indication, where appropriate, of the relevant passages | Relevant to claim No. |
| --- | --- | --- |
| Y | WO 2013/027767 A1 (NIPPON SHOKUBAI CO., LTD.) 28 February 2013 (2013-02-28) paragraphs [0050], [0113]-[0114], example 69 | 1-3 |
| Y | JP 61-64078 A (SANYO ELECTRIC CO., LTD.) 02 April 1986 (1986-04-02) page 1, right column, lines 14-19 | 1-3 |
| Y | JP 2007-80614 A (SONY CORP.) 29 March 2007 (2007-03-29) paragraphs [0033], [0048] | 1-3 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **22 December 2022** | **10 January 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
**Information on patent family members**

International application No.

**PCT/JP2022/040407**

| Patent document cited in search report | | | Publication date (day/month/year) | Patent family member(s) | | | Publication date (day/month/year) |
|---|---|---|---|---|---|---|---|
| WO | 2013/027767 | A1 | 28 February 2013 | US | 2014/0205909 | A1 | |
| | | | | paragraphs [0131], [0239]-[0240], example 69 | | | |
| | | | | EP | 2750225 | A1 | |
| | | | | CN | 103748710 | A | |
| | | | | TW | 201312840 | A | |
| | | | | CN | 105375070 | A | |
| | | | | JP | 2014-26951 | A | |
| | | | | JP | 2014-29818 | A | |
| JP | 61-64078 | A | 02 April 1986 | (Family: none) | | | |
| JP | 2007-80614 | A | 29 March 2007 | (Family: none) | | | |

Form PCT/ISA/210 (patent family annex) (January 2015)

12

**EP 4 451 372 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11026013 A
- JP 2019139986 A